# FASCICULE DE BREVET EUROPEEN

(11) **EP 3 975 356 B1**
(45) Date de publication et mention de la délivrance du brevet: **10.06.2026**
(21) Numéro de dépôt: 20306106.4
(22) Date de dépôt: 28.09.2020
(51) Int. Cl.: H02B 13/045

(54) **CUVE À INTÉGRITÉ MÉCANIQUE RENFORCÉE**
TANK MIT VERSTÄRKTER MECHANISCHER FESTIGKEIT
TANK WITH REINFORCED MECHANICAL INTEGRITY

(43) Date de publication de la demande: 30.03.2022
(73) Titulaire: Schneider Electric Industries SAS, 92500 Rueil Malmaison (FR)
(72) Inventeur: BONFILS,, Jean-Michel, 38050 GRENOBLE Cedex 09 (FR); TRIOZON,, André, 38050 GRENOBLE Cedex 09 (FR)
(74) Mandataire: Santarelli

(56) Documents cités:
- EP-A1- 3 188 331
- CN-U- 203 491 591
- CN-U- 203 722 117
- CN-U- 205 051 241
- CN-U- 206 585 262

## Description

### DOMAINE TECHNIQUE

La présente invention concerne une cuve destinée à contenir des appareils de sécurité et de commande des réseaux électriques de distribution haute tension, c'est-à-dire opérant à une tension supérieure à 1000V.

L'invention concerne notamment, une cuve étanche remplie d'un gaz diélectrique de remplissage sous pression destiné à garantir une isolation électrique des appareils vis-à-vis de l'extérieur ainsi qu'une isolation des parties électriques sous tension entre elles.

### ÉTAT DE LA TECHNIQUE ANTÉRIEURE

Dans les équipements haute tension de type GIS (Gas Insulation Switchgear), les appareils de sécurité et de commande (ci-après « les appareils ») sont généralement installés dans des cuves. Ces appareils peuvent comprendre par exemple des disjoncteurs, des contacteurs, des interrupteurs, des sectionneurs, des fonctions fusibles ou encore des fonctions de comptage.

Aussi, afin de garantir notamment une isolation électrique suffisante avec l'environnement extérieur, ces cuves sont remplies d'un gaz diélectrique sous pression.

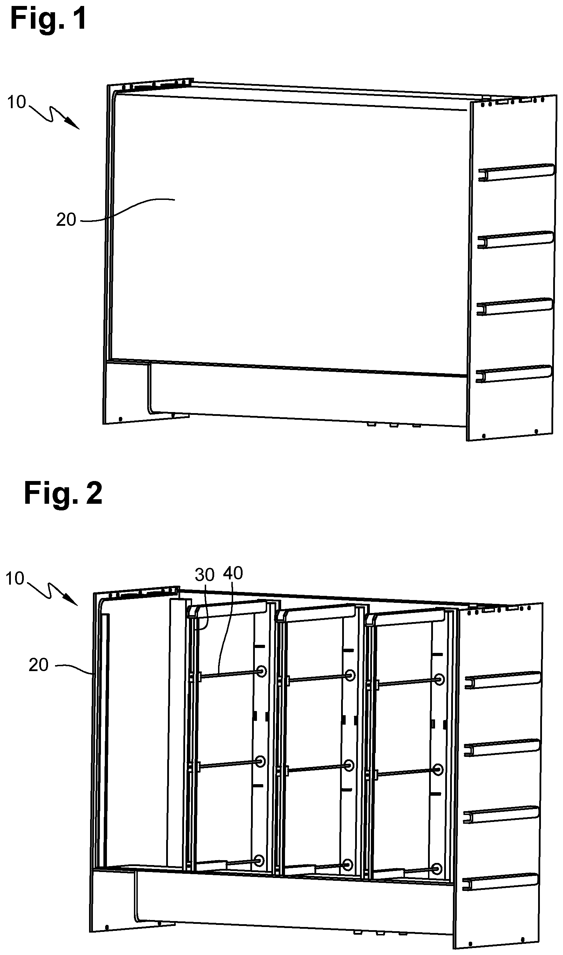

Les cuves 10 (figures 1 et 2) sont généralement de forme parallélépipédique, et comprennent un manteau 20 fait de tôles métalliques de quelques millimètres d'épaisseur. Des renforts métalliques 30, par exemple sous forme de montants ou de cadres, s'étendant sur la face interne des tôles peuvent être considérés afin de garantir leur intégrité mécanique, et notamment leur conférer une résistance à la pression exercée par le gaz diélectrique.

La pression de gaz dépend, à cet égard, de la tension d'utilisation des appareils disposés dans la cuve. En particulier, plus la tension d'utilisation est élevée, plus la pression de gaz nécessaire à une isolation électrique satisfaisante doit être importante, de sorte que les seuls renforts métalliques ne peuvent suffire à garantir l'intégrité mécanique de la cuve.

Cet effet de pression est par ailleurs exacerbé en cas d'amorçage électrique interne qui peut également générer temporairement une surpression de quelques bars dans le volume interne de la cuve.

Dès lors qu'une pression de gaz importante doit être considérée, l'état de l'art consiste à augmenter l'épaisseur des tôles du manteau de la cuve et/ou à introduire des renforts métalliques plus solides pour éviter un gonflement de la cuve, voire un déchirement du manteau si la pression était trop forte. Mais ces solutions ne sont pas toujours satisfaisantes sur le plan économique ni sur le plan de l'encombrement.

Il a donc été proposé de consolider la cuve en plaçant des tirants métalliques 40 transversaux pour maintenir des panneaux internes opposés de ladite cuve. Notamment, les tirants métalliques sont généralement des barres qui sont fixées, par leurs extrémités, à deux montants se faisant face.

Toutefois de tels tirants ne sont pas satisfaisants.

En effet, dès que la tension d'utilisation devient trop importante, notamment supérieure à 24 kV, les tirants métalliques sont soumis à des contraintes diélectriques difficilement gérables. En particulier, les tirants métalliques peuvent provoquer des amorçages.

Aussi, afin de pallier ce problème, des tirants en matériau isolant de type thermoplastique ou thermodurcissable ont été considérés. Toutefois, ces derniers ne sont pas de nature à conférer une résistance mécanique suffisante du fait notamment de leur tendance au fluage, et ils peuvent avoir un mauvais comportement lors d'une hausse de température en cas d'arc interne.

Il est par ailleurs notable, et pour des raisons essentiellement écologiques, qu'il existe une volonté générale de remplacer le SF₆ par un gaz à faible impact environnemental et faible toxicité.

Les autres gaz existants, moins performant que le SF₆ sur le plan diélectrique, nécessitent d'être employés à des pressions plus élevées. En d'autres termes, les renforts métalliques mis en œuvre ne sont pas non plus suffisants pour assurer l'intégrité mécanique de cuves abritant des appareils fonctionnant par exemple à des tensions supérieures ou égales à 12kV.

Un but de la présente invention est donc de proposer une cuve présentant une résistance mécanique renforcée au regard des cuves connues de l'état de la technique.

Un autre but de la présente invention est de proposer une cuve permettant d'abriter des appareils susceptibles de fonctionner à des tensions élevées supérieures ou égales à 12kV, voire supérieures à 48 kV, avec un gaz de remplissage présentant des performances diélectriques dégradées par rapport au SF6.

CN206585262U, CN203722117U, CN205051241U, CN203491591U et EP3188331A1 divulguent exemples connus de cuves pour appareillages de commutation isolés au gaz comprenant des tirants de renforcement.

### EXPOSÉ DE L'INVENTION

Les buts de l'invention sont, au moins en partie, atteints par une cuve à intégrité mécanique renforcée destinée à être remplie d'un gaz sous une pression supérieure à la pression atmosphérique, et dont le manteau comprend au moins un panneau plan, la cuve comprend une sangle de renfort, électriquement isolante, et reliant au moins deux points d'accroche de la face interne du manteau de manière à s'opposer à toute déformation de l'au moins un panneau plan susceptible d'intervenir sous l'effet de la pression exercée par le gaz.

Selon un mode de mise en œuvre, ladite cuve est de forme parallélépipédique, et la sangle de renfort relie des points d'accroche disposés sur des faces internes de deux panneaux opposés, avantageusement les deux panneaux sont les panneaux de plus grande dimension de la cuve.

Selon un mode de mise en œuvre, les points d'accroche sont disposés respectivement sur la face interne de l'une et de l'autre des deux panneaux plans opposés de sorte que le chemin parcouru par la sangle de renfort forme un zigzag.

Selon un mode de mise en œuvre, la sangle de renfort relie au moins trois points d'accroche disposés sur au moins trois panneaux adjacents deux à deux de sorte que le chemin parcouru par la sangle de renfort a une forme polygonale.

Selon un mode de mise en œuvre, ladite cuve comprend en outre des renforts s'étendant parallèlement sur la face interne d'au moins un panneau, avantageusement les renforts s'étendent sur la face interne des deux panneaux de plus grande dimension et parallèlement au plus grand côté desdits panneaux.

Selon un mode de mise en œuvre, les renforts sont agencés deux à deux en vis-à-vis sur les faces internes des deux panneaux de plus grande dimension, avantageusement les montants en vis-à-vis forment un cadre de renfort.

Selon un mode de mise en œuvre, les points d'accroche sont disposés sur les renforts, et de sorte que le chemin formé par la sangle de renfort soit dans un plan parallèle auxdits renforts.

Selon un mode de mise en œuvre, les points d'accroche comprennent un crochet ou un axe au niveau duquel la sangle de renfort peut coulisser.

Selon un mode de mise en œuvre, la sangle de renfort est fixée par ses extrémités à deux points d'accroche parmi les points d'accroche, dits points d'accroche terminaux, avantageusement au moins l'un parmi les deux points d'accroche terminaux est muni de moyen de serrage destinés à mettre en tension la sangle de serrage.

Selon un mode de mise en œuvre, le moyen de serrage comprend un axe monté en rotation selon son axe de révolution, et muni d'une fente dans laquelle est insérée une des extrémités de la sangle de renfort, le moyen de serrage comprend en outre un cliquet agencé pour empêcher la rotation de l'axe lorsque la sangle de renfort est en tension.

Selon un mode de mise en œuvre, un des points d'accroche terminaux comprend le moyen de serrage permettant de mettre en tension la sangle de renfort à partir d'une de ces extrémités tandis que l'autre extrémité de la sangle de renfort comprend une couture permettant de la fixer à l'autre point d'accroche terminal.

Selon un mode de mise en œuvre, la sangle de renfort comprend une fibre tissée, avantageusement la fibre tissée comprend de la fibre de verre ou de la fibre aramide, notamment du poly(p-phénylènetéréphtalamide).

La fibre tissée peut comprendre au moins des composés suivant :
- des fibres para-aramides (par exemple du paraphenylene terephthalamide (PPTA) (distribué par Dupont sous mes marques Kevlar^{®} 29 et Kevlar^{®} 49, ou par Teijin sous la marque Twaron^{®}),
- des copolymères de para-aramides, par exemple des copolymères de poly-paraphenylene et de terephthalamide (distribués par Teijin sous la marque Technora^{®}).
   - du polybenzoxazole (PBO), par exemple du poly(p-phénylène-2,6-benzobisoxazole) (distribué par Toyobo sous la marque Zylon^{®}),
- du polysulfonamide (distribué par Shanghai Tanlon Fiber sous a marque Tanlon^{®}),
- du polyéthylène haute ténacité (aussi appelé PE à ultra haut poids moléculaire (UHMWPE)) (distribué par DSM sous la marque Dyneema^{®}, ou par Honeywell sous la marque Spectra^{®}),
- des polymères à cristaux liquides (LCP) (distribués par Kuraray sous la marque Vectran^{®}).

### BRÈVE DESCRIPTION DES DESSINS

D'autres caractéristiques et avantages apparaîtront dans la description qui va suivre d'une cuve à intégrité mécanique renforcée selon l'invention, donnés à titre d'exemples non limitatifs, en référence aux dessins annexés dans lesquels :
La figure 1 est une représentation schématique d'une cuve connue de l'état de la technique, de forme parallélépipédique, et selon une vue en perspective ;
La figure 2 reprend la cuve de la figure 1, et expose l'agencement des renforts métalliques ;
La figure 3 est photo d'un système modulaire intégrant la cuve selon la présente invention ;
La figure 4a est une représentation schématique de la cuve selon la présente invention ;
La figure 4b est une représentation schématique de la cuve selon une première variante de la présente invention, notamment la figure 4b illustre l'agencement de la sangle de renfort en zigzag ;
La figure 5 est une représentation schématique d'un point d'accroche en forme d'axe susceptible d'être mis en œuvre dans la présente invention
La figure 6 est une représentation schématique d'un moyen de serrage auto-coinçant susceptible d'être mis en œuvre dans la présente invention.

### EXPOSÉ DÉTAILLÉ DE MODES DE RÉALISATION PARTICULIERS

Dans la description ci-après, les termes qui dépendent de l'orientation de la cuve tels que « sur », « au-dessus », « supérieure », « inférieure », « gauche », « droite », « avant » et « arrière » s'appliquent en considérant que la cuve est orientée de la façon illustrée dans les figures.

La présente invention concerne une cuve 100 à intégrité mécanique renforcée. En particulier, la présente invention concerne une cuve 100 étanche destinée à loger des appareils de sécurité et de commande (ci-après « appareils ») d'un réseau haute tension.

La tension électrique des appareils peut être supérieure ou égale à 12kV.

Afin de garantir une isolation électrique suffisante, notamment lors d'amorçages susceptibles d'intervenir au niveau des appareils, la cuve 100 est généralement remplie d'un gaz diélectrique sous une pression supérieure à la pression atmosphérique et pouvant atteindre 5 bars.

Le gaz diélectrique peut comprendre du SF₆. Toutefois pour des raisons environnementales, il est préférable lorsque cela est possible de le remplacer par un gaz diélectrique plus respectueux de l'environnement et de la santé, par exemple par de l'air sous pression.

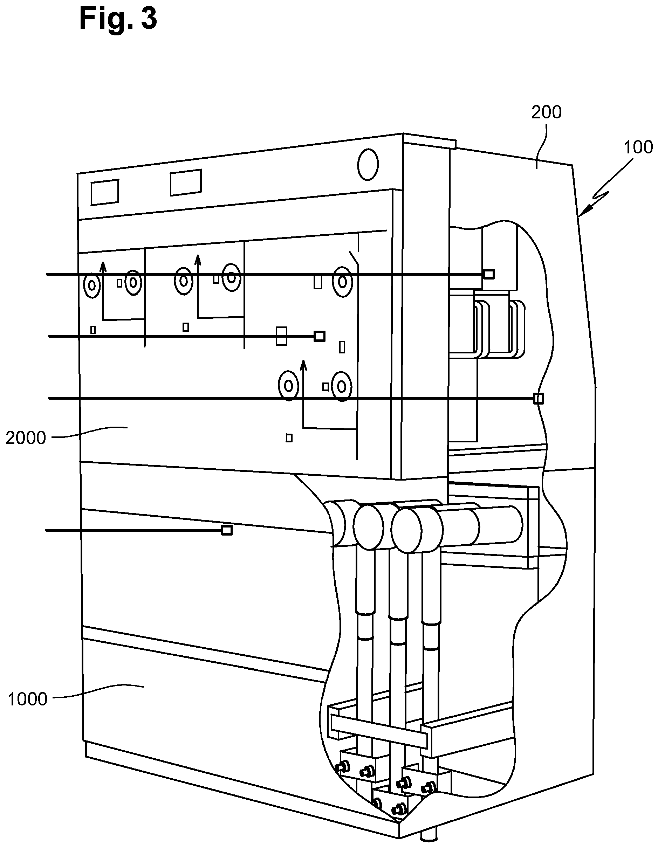

Tel que représenté à la figure 3, la cuve 100 peut s'inscrire dans un système modulaire, et reposer, par exemple, sur un soubassement 1000 au niveau duquel le câblage entre les appareils de la cuve et l'environnement extérieur est effectué.

Un module frontal 2000 de commande des appareils et disposé sur un panneau avant de la cuve 100 peut également être considéré.

La suite de la description se limite à la description de la cuve 100 selon la présente invention, et en particulier à une cuve de forme parallélépipédique.

Toutefois, l'invention ne se limite pas à ce seul aspect, et l'homme du métier avec ses connaissances générales et la description qui suit pourra généraliser la présente invention à une cuve dont le manteau comprend au moins un panneau plan.

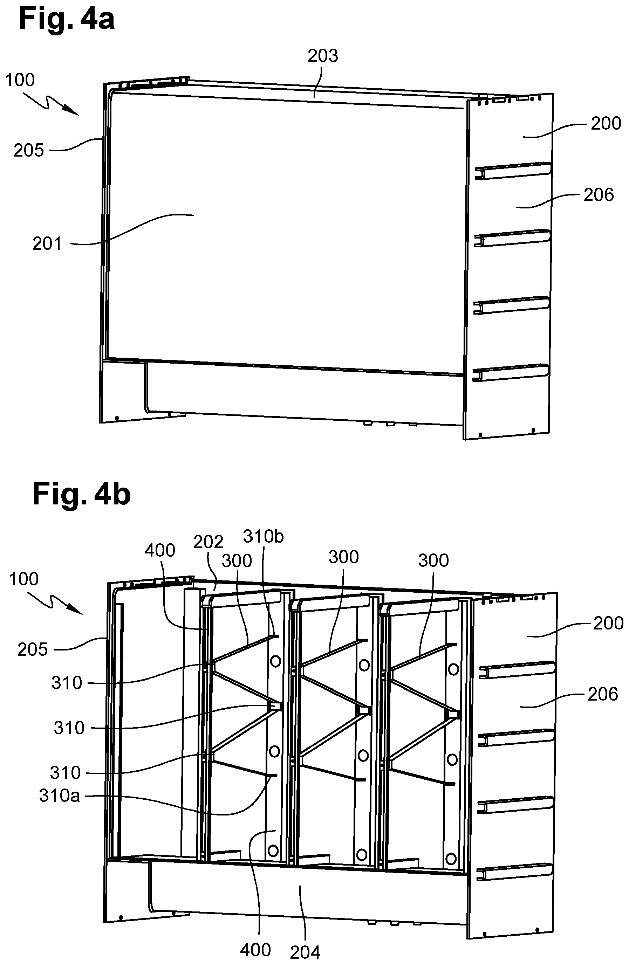

La cuve 100 parallélépipédique selon la présente invention comprend donc un manteau 200, également de forme parallélépipédique (figures 4a et 4b).

Le manteau 200 comprend ainsi six panneaux dont les faces internes délimitent un volume V de la cuve 100. En particulier, le manteau 200 comprend, opposés deux à deux, respectivement, un panneau avant 201 et un panneau arrière 202, un panneau supérieur 203 et un panneau inférieur 204, un panneau gauche 205 et un panneau droite 206.

Le volume interne V étanche est destiné à loger des appareils de manière à notamment isoler électriquement ces derniers de l'environnement extérieur.

Le manteau 200 est également rempli d'un gaz diélectrique sous une pression supérieure à la tension atmosphérique, par exemple une pression d'environ 2,5 bars pour une tension de 24kV.

La cuve 100 selon la présente invention comprend une sangle de renfort 300, électriquement isolante, et reliant au moins deux points d'accroche 310 de la face interne du manteau 200 de manière à s'opposer à toute déformation d'au moins un des panneaux de la cuve 100 susceptible d'intervenir sous l'effet de la pression exercée par le gaz.

Par « sangle de renfort », selon les termes de la présente invention, on entend aussi bien une sangle plate qu'une corde de section quelconque, par exemple de de section circulaire.

Il est entendu, sans qu'il soit nécessaire de le préciser, que pour s'opposer à toute déformation, un point d'accroche est formé sur la face interne du panneau considéré et l'autre point d'accroche est disposé sur la face interne d'un autre panneau.

Il est également entendu, sans qu'il soit nécessaire de le préciser, que pour s'opposer à toute déformation, la sangle de renfort est mise en tension.

La mise en œuvre de la sangle de renfort permet de s'affranchir des tirants métalliques considérés dans les cuves connues de l'état de la technique, et par voie de conséquence de limiter les amorçages susceptibles d'être générés en présence de tels tirants.

Par ailleurs, la sangle est relativement facile à installer, de sorte que le surcoût associé à sa mise en œuvre reste limité.

La sangle de renfort peut comprendre une fibre tissée, avantageusement la fibre tissée comprend de la fibre de verre ou de la fibre aramide, notamment du poly(p-phénylènetéréphtalamide) (Kevlar^{®}).

Les fibres de verre et aramide présentent d'excellentes propriétés mécanique et thermiques, et sont par conséquent des matériaux de choix pour leur mise en œuvre dans des applications moyenne et haute tension.

Par ailleurs, ce renforcement de l'intégrité mécanique de la cuve par une sangle permet d'envisager des gaz diélectriques autres que le SF₆, et nécessitant d'être employés à des pressions plus élevées. Plus particulièrement, il est possible de considérer l'air comme gaz de remplissage de la cuve.

Selon une première variante particulièrement avantageuse, la sangle de renfort 300 relie des points d'accroche 310 disposés sur des faces internes de deux panneaux opposés, avantageusement les deux panneaux sont les panneaux de plus grande dimension de la cuve 200.

Par exemple, la sangle de renfort 300 relie des points d'accroche 310 disposés sur la face interne du panneau avant et du panneau arrière.

Toujours selon cette variante, les points d'accroche 310 peuvent être disposés respectivement sur la face interne de l'un et de l'autre des deux panneaux opposés de sorte que le chemin parcouru par la sangle de renfort 300 forme un zigzag.

Par « zigzag », on entend une ligne brisée formant des angles alternativement saillants et rentrants.

Selon une autre variante (non illustré), la sangle de renfort 300 relie au moins trois points d'accroche 310 disposés au moins trois panneaux adjacents deux à deux de sorte que le chemin parcouru par la sangle de renfort a une forme polygonale.

Par exemple, la sangle de renfort 300 relie quatre points d'accroche 310 disposés sur quatre panneaux adjacents deux à deux de sorte que le chemin parcouru par la sangle de renfort a une forme polygonale, et plus particulièrement un losange.

Par exemple, les points d'accroche 310 sont disposés au centre des panneaux avant, gauche, arrière et droite.

Quelle que soit la variante considérée, la cuve 100 peut comprendre en outre des renforts 400 s'étendant parallèlement sur la face interne d'au moins un panneau, avantageusement les renforts s'étendent dans le sens vertical sur la face interne des deux panneaux de plus grande dimension. Par exemple, les renforts 400 s'étendent verticalement.

Par « renfort », on entend une structure de forme généralement allongée destinée à renforcer la tenue mécanique d'un panneau. Un renfort peut notamment comprendre une structure profilée.

De manière particulièrement avantageuse, les renforts 400 sont agencés deux à deux en vis-à-vis sur les faces internes des deux panneaux de plus grande dimension. Deux renforts 400 en vis-à-vis peuvent avantageusement former un cadre de renfort.

Le nombre de renforts 400, ainsi que leur espacement sur la face interne d'un panneau dépend essentiellement de l'épaisseur du panneau et du matériau le formant.

En particulier, la cuve 100 peut comprendre une pluralité de cadres de renfort sur lesquelles reposent les panneaux avant, supérieur, arrière et inférieur.

De manière avantageuse, les points d'accroche 310 sont disposés sur les renforts, de sorte que le chemin formé par la sangle de renfort soit dans un plan formé par deux renforts en vis-à-vis.

En particulier, chaque paire de renforts en vis-à-vis peut être associée à une sangle de renfort 300 qui lui est propre.

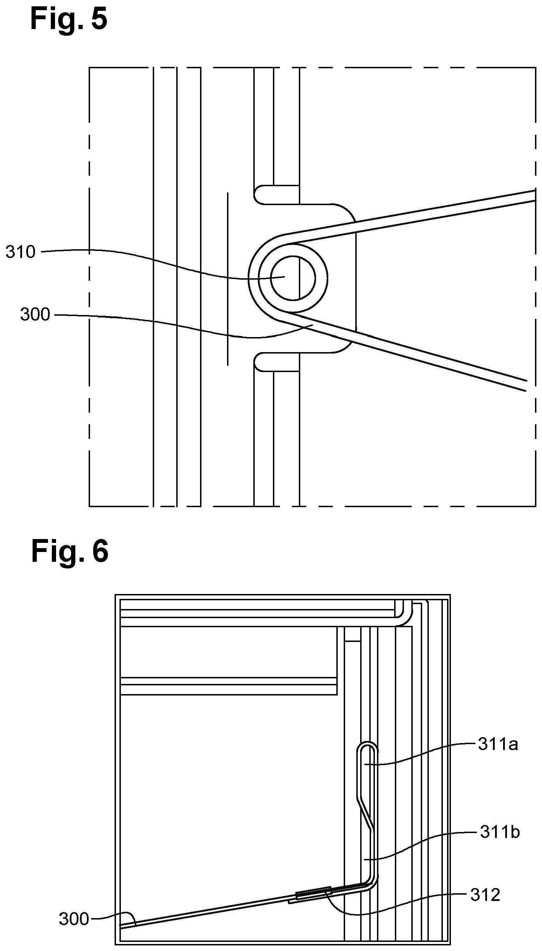

De manière avantageuse, les points d'accroche 310 peuvent comprendre un crochet ou un axe (figure 5) au niveau duquel la sangle de renfort peut coulisser.

Par ailleurs, la sangle de renfort 300 est fixée par ses extrémités à deux points d'accroche 310a et 310b parmi les points d'accroche 300, dits points d'accroche terminaux.

La fixation à l'un et ou l'autre des deux points d'accroche terminaux peut impliquer un moyen de serrage destiné à mettre en tension la sangle de serrage.

Plus particulièrement, le moyen de serrage peut comprendre un axe monté en rotation selon son axe de révolution, et muni d'une fente dans laquelle est insérée une des extrémités de la sangle de renfort. Le moyen de serrage peut, en outre, comprendre un cliquet agencé pour empêcher la rotation de l'axe lorsque la sangle de renfort est en tension.

Selon une variante avantageuse, le moyen de serrage peut être auto-coinçant (ou autobloquant). En particulier, le moyen de serrage, tel que représenté à la figure 6, peut comprendre deux axes 311a et 311b (présentant par un exemple un profil allongé, notamment de forme oblongue). Selon cette variante, la sangle de renfort 300 est agencée au niveau des deux axes 311a et 311b de manière à coincer ladite sangle. Une bague 312 et/ou un point de couture peuvent également être considérés pour renforcer le « coinçage ».

De manière avantageuse, un des points d'accroche terminaux comprend le moyen de serrage permettant de mettre en tension la sangle de renfort à partir d'une de ces extrémités tandis que l'autre extrémité de la sangle de renfort comprend une couture permettant de la fixer à l'autre point d'accroche terminal.

De manière alternative, les deux points d'accroche terminaux peuvent comprendre chacun un moyen de serrage à cliquet ou auto-coinçant.

## Revendications

1. Cuve (100) à intégrité mécanique renforcée destinée à être remplie d'un gaz sous une pression supérieure à la pression atmosphérique pour loger des appareils électriques haute tension, et dont le manteau (200) comprend au moins un panneau (201, 202, 203, 204, 205, 206) plan, **caractérisé en ce que** la cuve (100) comprend une sangle de renfort (300), électriquement isolante, et reliant au moins deux points d'accroche (310) de la face interne du manteau (200) de manière à s'opposer à toute déformation de l'au moins un panneau plan susceptible d'intervenir sous l'effet de la pression exercée par le gaz.

2. Cuve selon la revendication 1, dans laquelle ladite cuve est de forme parallélépipédique, et la sangle de renfort (300) relie des points d'accroche (310) disposés sur des faces internes de deux panneaux opposés.

3. Cuve selon la revendication 2, dans laquelle les points d'accroche (310) sont disposés respectivement sur la face interne de l'une et de l'autre des deux panneaux plans opposés de sorte que le chemin parcouru par la sangle de renfort (300) forme un zigzag.

4. Cuve selon la revendication 2, dans laquelle la sangle de renfort (300) relie au moins trois points d'accroche (310) disposés sur au moins trois panneaux adjacents deux à deux de sorte que le chemin parcouru par la sangle de renfort (300) a une forme polygonale.

5. Cuve selon l'une des revendications 2 à 4, dans laquelle ladite cuve comprend en outre des renforts (400) s'étendant verticalement sur la face interne d'au moins un panneau.

6. Cuve selon la revendication 5, dans laquelle les renforts (400) sont agencés deux à deux en vis-à-vis sur les faces internes des deux panneaux de plus grande dimension, avantageusement les montants en vis-à-vis forment un cadre de renfort.

7. Cuve selon la revendication 5 ou 6, dans laquelle les points d'accroche (310) sont disposés sur les renforts (400), et de sorte que le chemin formé par la sangle de renfort (300) soit dans un plan parallèle auxdits renforts (400).

8. Cuve selon la revendication 7, dans laquelle les points d'accroche (310) comprennent un crochet ou un axe au niveau duquel la sangle de renfort (300) peut coulisser.

9. Cuve selon l'une des revendications 1 à 8, dans laquelle la sangle de renfort (300) est fixée par ses extrémités à deux points d'accroche parmi les points d'accroche (310), dits points d'accroche terminaux (310a, 310b), avantageusement au moins l'un parmi les deux points d'accroche (310) terminaux est muni de moyen de serrage destinés à mettre en tension la sangle de serrage.

10. Cuve selon la revendication 9, dans laquelle le moyen de serrage comprend un axe monté en rotation selon son axe de révolution, et muni d'une fente dans laquelle est insérée une des extrémités de la sangle de renfort (300), le moyen de serrage comprend en outre un cliquet agencé pour empêcher la rotation de l'axe lorsque la sangle de renfort (300) est en tension.

11. Cuve selon la revendication 9, dans laquelle le moyen de serrage est auto-coinçant couplé à une bague sertie ou une agrafe.

12. Cuve selon l'une des revendications 9 à 11, dans laquelle un des points d'accroche terminaux (310a, 310b) comprend le moyen de serrage permettant de mettre en tension la sangle de renfort (300) à partir d'une de ces extrémités tandis que l'autre extrémité de la sangle de renfort (300) comprend une couture permettant de la fixer à l'autre point d'accroche terminal (310a, 310b).

13. Cuve selon l'une des revendications 1 à 12, dans laquelle la sangle de renfort (300) comprend une fibre tissée, avantageusement la fibre tissée comprend de la fibre de verre ou de la fibre aramide, notamment du poly(p-phénylènetéréphtalamide).

## Patentansprüche

1. Behälter (100) mit verstärkter mechanischer Integrität, der dazu bestimmt ist, mit einem Gas unter einem Druck über dem Atmosphärendruck gefüllt zu werden, um elektrische Hochspannungsgeräte aufzunehmen, und dessen Mantel (200) mindestens eine ebene Platte (201, 202, 203, 204, 205, 206) umfasst, **dadurch gekennzeichnet, dass** der Behälter (100) einen elektrisch isolierenden Verstärkungsgurt (300) umfasst, der mindestens zwei Befestigungspunkte (310) der Innenseite des Mantels (200) verbindet, um jeder Verformung der mindestens einen ebenen Platte entgegenzuwirken, die unter der Einwirkung des von dem Gas ausgeübten Drucks auftreten kann.

2. Behälter nach Anspruch 1, wobei der Behälter parallelepipedisch geformt ist und der Verstärkungsgurt (300) Befestigungspunkte (310) verbindet, die an Innenseiten von zwei gegenüberliegenden Platten angeordnet sind.

3. Behälter nach Anspruch 2, wobei die Befestigungspunkte (310) jeweils an der Innenseite der einen und der anderen der beiden gegenüberliegenden flachen Platten angeordnet sind, so dass der von dem Verstärkungsgurt (300) zurückgelegte Weg ein Zickzack bildet.

4. Behälter nach Anspruch 2, wobei der Verstärkungsgurt (300) mindestens drei Befestigungspunkte (310) verbindet, die an mindestens drei benachbarten Platten paarweise angeordnet sind, so dass der von dem Verstärkungsgurt (300) zurückgelegte Weg eine polygonale Form aufweist.

5. Behälter nach einem der Ansprüche 2 bis 4, wobei der Behälter ferner Verstärkungen (400) umfasst, die sich vertikal an der Innenseite von mindestens einer Platte erstrecken.

6. Behälter nach Anspruch 5, wobei die Verstärkungen (400) paarweise gegenüberliegend an den Innenseiten der beiden größeren Platten eingerichtet sind, wobei die gegenüberliegenden Pfosten in vorteilhafter Weise einen Verstärkungsrahmen bilden.

7. Behälter nach Anspruch 5 oder 6, wobei die Befestigungspunkte (310) an den Verstärkungen (400) angeordnet sind und derart, dass der von dem Verstärkungsgurt (300) gebildete Weg in einer Ebene parallel zu den Verstärkungen (400) verläuft.

8. Behälter nach Anspruch 7, wobei die Befestigungspunkte (310) einen Haken oder eine Achse umfassen, an dem/der der Verstärkungsgurt (300) gleiten kann.

9. Behälter nach einem der Ansprüche 1 bis 8, wobei der Verstärkungsgurt (300) an seinen Enden an zwei Befestigungspunkten von den als Endbefestigungspunkte (310a, 310b) bezeichneten Befestigungspunkten (310) befestigt ist, wobei in vorteilhafter Weise mindestens einer der beiden Endbefestigungspunkte (310) mit Spannmitteln versehen ist, die dazu bestimmt sind, den Spanngurt zu spannen.

10. Behälter nach Anspruch 9, wobei das Spannmittel eine Achse umfasst, die gemäß ihrer Drehachse rotatorisch angebracht und mit einem Schlitz versehen ist, in den eines der Enden des Verstärkungsgurts (300) eingesetzt ist, wobei das Spannmittel ferner eine Ratsche umfasst, die eingerichtet ist, um die Rotation der Achse zu verhindern, wenn der Verstärkungsgurt (300) gespannt ist.

11. Behälter nach Anspruch 9, wobei das Spannmittel selbstspannend mit einem Bördelring oder einer Klammer gekoppelt ist.

12. Behälter nach einem der Ansprüche 9 bis 11, wobei einer der Endbefestigungspunkte (310a, 310b) das Spannmittel umfasst, das erlaubt, den Verstärkungsgurt (300) ab einem dieser Enden zu spannen, während das andere Ende des Verstärkungsgurtes (300) eine Naht umfasst, die erlaubt, ihn an dem anderen Endbefestigungspunkt (310a, 310b) zu befestigen.

13. Behälter nach einem der Ansprüche 1 bis 12, wobei der Verstärkungsgurt (300) eine gewebte Faser umfasst, wobei die gewebte Faser in vorteilhafter Weise Glasfaser oder Aramidfaser, insbesondere Poly(p-phenylenterephthalamid), umfasst.

## Claims

1. Tank (100) with reinforced mechanical integrity intended to be filled with a gas at a pressure greater than atmospheric pressure to house high-voltage electrical apparatuses, and of which the shell (200) comprises at least one planar panel (201, 202, 203, 204, 205, 206), **characterized in that** the tank (100) comprises a reinforcing strap (300), electrically insulating, and connecting at least two attachment points (310) of the inner face of the shell (200) so as to oppose any deformation of the at least one planar panel capable of occurring under the effect of the pressure exerted by the gas.

2. Tank according to claim 1, wherein said tank is of parallelepipedal shape, and the reinforcing strap (300) connects attachment points (310) located on inner faces of two opposite panels.

3. Tank according to claim 2, wherein the attachment points (310) are disposed respectively on the inner face of one and the other of the two opposite planar panels such that the path traveled by the reinforcing strap (300) forms a zigzag.

4. Tank according to claim 2, wherein the reinforcing strap (300) connects at least three attachment points (310) located on at least three panels that are adjacent in pairs, such that the path traveled by the reinforcing strap (300) has a polygonal shape.

5. Tank according to one of claims 2 to 4, wherein said tank further comprises reinforcements (400) extending vertically on the inner face of at least one panel.

6. Tank according to claim 5, wherein the reinforcements (400) are arranged in pairs facing each other on the inner faces of the two larger-sized panels, advantageously the facing uprights form a reinforcing frame.

7. Tank according to claim 5 or 6, wherein the attachment points (310) are disposed on the reinforcements (400), and such that the path formed by the reinforcing strap (300) is in a plane parallel to said reinforcements (400).

8. Tank according to claim 7, wherein the attachment points (310) comprise a hook or a pin along which the reinforcing strap (300) can slide.

9. Tank according to one of claims 1 to 8, wherein the reinforcing strap (300) is fastened by its ends to two attachment points among the attachment points (310), referred to as end attachment points (310a, 310b), advantageously at least one of the two end attachment points (310) is provided with tightening means intended to tension the tightening strap.

10. Tank according to claim 9, wherein the tightening means comprises an axis mounted in rotation in its axis of revolution, and provided with a slot wherein one of the ends of the reinforcing strap (300) is inserted, the tightening means further comprises a catch arranged to prevent rotation of the axis when the reinforcing strap (300) is tensioned.

11. Tank according to claim 9, wherein the tightening means is self-clamping and coupled to a crimped ring or a clip.

12. Tank according to one of claims 9 to 11, wherein one of the end attachment points (310a, 310b) comprises the tightening means for tensioning the reinforcing strap (300) using one of these ends while the other end of the reinforcing strap (300) comprises a seam for fastening it to the other end attachment point (310a, 310b).

13. Tank according to one of claims 1 to 12, wherein the reinforcing strap (300) comprises a woven fiber, advantageously the woven fiber comprises glass fiber or aramid fiber, in particular poly(p-phenylene terephthalamide).
